Europäisches Patentamt

(19) European Patent Office

Office européen des brevets

(11) Publication number : **0 307 443 B1**

(12) **EUROPEAN PATENT SPECIFICATION**

(45) Date of publication of patent specification :
27.11.91 Bulletin 91/48

(21) Application number : 88902855.1

(22) Date of filing : 16.03.88

(86) International application number :
**PCT/FI88/00036**

(87) International publication number :
**WO 88/07009 22.09.88 Gazette 88/21**

(51) Int. Cl.⁵ : **B65D 81/14, B32B 3/28**

(54) WRAPPING MATERIAL, METHOD OF MANUFACTURE AND METHOD OF USE.

(30) Priority : **19.03.87 FI 871212**

(43) Date of publication of application :
**22.03.89 Bulletin 89/12**

(45) Publication of the grant of the patent :
**27.11.91 Bulletin 91/48**

(84) Designated Contracting States :
**BE DE FR GB IT NL SE**

(56) References cited :
**GB-A- 1 481 050**
**GB-A- 2 093 403**

(73) Proprietor : **YHTYNEET PAPERITEHTAAT OY**
**PL 33**
**SF-37601 Valkeakoski (FI)**

(72) Inventor : **HOLM, Pekka**
**Utinkatu 15 as 30**
**SF-45200 Kouvola (FI)**
Inventor : **KÄKI, Olli**
**Kannistonmäki**
**SF-37700 Sääksmäki (FI)**

(74) Representative : **Bunke, Holger, Dr.rer.nat.**
**Dipl.-Chem. et al**
**Patentanwälte Prinz, Leiser, Bunke & Partner**
**Manzingerweg 7**
**W-8000 München 60 (DE)**

EP 0 307 443 B1

## Description

For the packaging of irregularly shaped objects, such as pieces of furniture, bicycles or various machine components, kraft crêpe has been used commonly. It is a material made of kraft paper by means of finely divided corrugation, whose most important property, besides the protective function, is stretching. The opening of the crêpe wrinkles on pulling permits wrapping of the material around irregularly shaped faces without formation of detrimental slack folds.

It is a drawback of kraft crêpe that it is not resistant to moisture. Attempts have been made to solve the problem by manufacturing the crêpe out of a material onto which a film made of a suitable plastic has been laminated before crêping. The manufacture of a product of this sort is, however, slow, and consequently quite expensive.

GB-A-2 093 403 discloses a sheet material comprising a layer of corrugated paper discontinuously bonded to a layer of plastic film, which is however too strong and rigid to be used as a wrapping material for the packaging of irregularly shaped objects.

The present invention provides a stretchable wrapping material comprising a layer of crêpe paper and a tensioning film of plastic attached onto the crêpe layer to the ridges of the crêpe paper wherein the stretchability of said tensioning film is as great as the stretchability of said crêpe paper.

Thus, according to the present Invention, a ready-crêped kraft wrapping and a tensioning film of plastic are combined in such a way that they are interconnected only at the topmost portions of the crêpe. When the product thus formed is tensioned around the object to be packaged, the wrinkles in the crêpe are straightened at the same time as the loose portions of the tensioning film are stretched and, by the effect of the tension, are pressed against the straightened crêpe and, at the same time, against the object to be packaged. Owing to the film, the protective wrapping is fully waterproof.

It is characteristic of the tensioning films that they can be stretched and that they also retain the tension produced by the stretching to some extent. When the tensioned film is damaged, as a rule, the hole becomes larger because of the tension.

In the following, the construction and the manufacture of a product in accordance with the invention will be described in more detail. In the drawings related to the description, Figure 1 is an extensively enlarged sectional view of a crêpe paper web in its longitudinal direction, Figure 2 is a sectional view of a material web in accordance with the invention in its longitudinal direction, and Figure 3 shows the arterial in accordance with the invention as wrapped onto an object.

The kraft crêpe paper 1 is formed by pressing a moistened paper web against a hot smooth cylinder, to whose face the web adheres. The web is detached by means of a doctor pressed against the face, which said doctor, at the same time, pushes the web colliding against the doctor so that wrinkles are formed in the web in its transverse direction. When the web is dried without stretching it, the wrinkles remain in the paper.

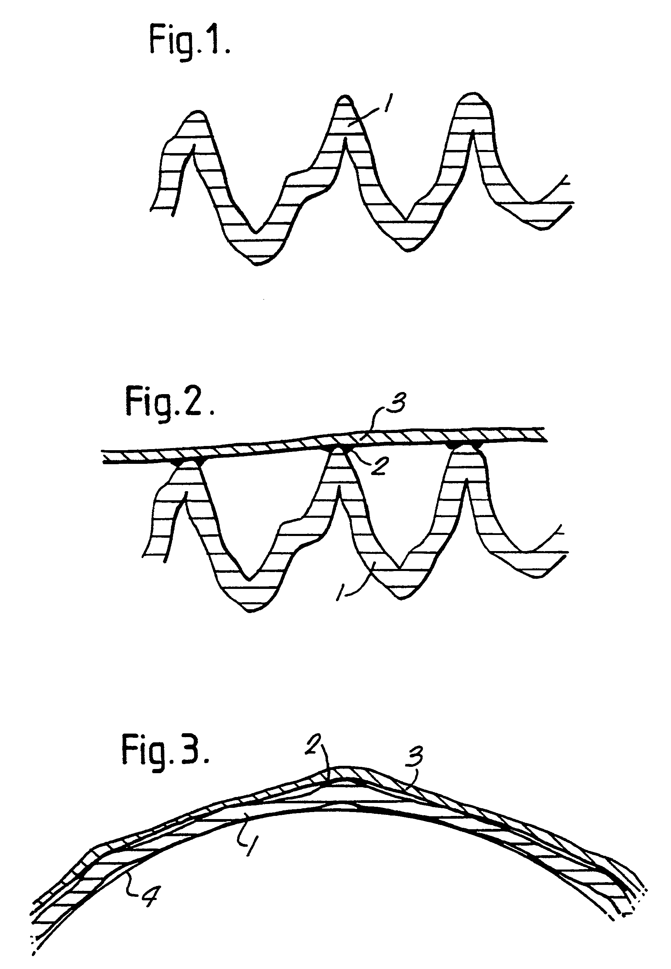

In the wrapping material shown in Fig. 2, an adhesive 2 has been applied to the topmost portions of the wrinkles in the crêpe paper 1, and a waterproof tensioning film 3 has been pressed into contact with the adhesive. The pressing is performed so lightly that the crêpe is not squashed flat.

In stead of an adhesive, it is also possible to use a hot-joining method in which the plastic film is heated until it becomes sticky, whereupon it is pressed, while in this state, against the ridges in the crêpe. The hot-joining may be carried out in particular so that the film comes directly from the nozzle of an extruder.

Of course, the plastic film may also be made sticky by other means, e.g. by means of a suitable solvent.

Fig. 3 shows a wrapping in accordance with the invention as tensioned against a convex face 4. The wrinkles in the crêpe 1 have been partly straightened, at the same time as the tensioning film 2 has been extended between its fastening portions. Both materials have been pressed almost into contact with each other. The result is a mechanically strong and moisture-proof package, which has been pressed tightly around the object to be packaged.

The crêpe gives the wrapping mechanical strength and elasticity and receives impacts. When, e.g., two layers of wrapping are used, the crêpe part of the outer layer prevents, because of its mechanical toughness, access of a possible sharp object to the underlying film to damage it even if the outer film were damaged. At the same time, a tear in the film, if any, is confined to the area between two nearest crêpe ridges.

As the paper, it is, of course, also possible to use a crêpe made of some other paper besides kraft.

The characteristic form of crêpe may also be produced, e.g., by means of corrugation equipment commonly used in the manufacture of corrugated fibreboard. In principle, a product in accordance with the invention is also produced in a machine that produces single-faced corrugated fibreboard when the tensioning film is used in stead of the facing paper.

As to the film, it is possible to use all plastic qualities that are used commonly when tensioning film is being produced.

The most essential feature of the invention is the joining together of a paper or equivalent that is deformed mechanically by becoming straight and of an extensible film material in an economical way so that the combined product can be stretched at the desired points.

## Claims

1. A stretchable wrapping material comprising a layer of crêpe paper (1) and a tensioning film of plastic (3) attached onto the crêpe layer to the ridges of the crêpe paper, characterized in that the stretchability of said tensioning film (3) is as great as the stretchability of said crêpe paper (1).

2. The wrapping material of claim 1 characterized in that said tensioning film (3) retains the tension produced by stretching to some extent.

3. The wrapping material of claim 1 or 2, characterized in that said tensioning film (3) is attached to said crêpe paper (1) by means of an adhesive (2).

4. The wrapping material of claim 1 or 2, characterized in that said tensioning film (3) is attached to said crêpe paper (1) by hot-joining.

5. The wrapping material of any one of claims 1 to 4, characterized in that said crêpe paper (1) consists of kraft crêpe paper.

6. The wrapping material of any one of claims 1 to 5, characterized in that said tensioning film (3) is attached to only one side of said crêpe paper (1).

7. A method for the manufacture of the stretchable wrapping material of any one of claims 1 to 6, characterized in that onto a crêpe paper (1), to its ridges, a tensioning film (3) is attached.

8. A method for the packaging of an irregularly shaped object, in which method a stretchable wrapping is wrapped around the object, characterized in that the stretchable wrapping of any one of claims 1 to 6 is wrapped around said object.

9. The method of claim 8, characterized in that the wrapping is wrapped such that the layer of crêpe paper (1) becomes facing inwards.

10. The method of claim 8 or 9, characterized in that the wrapping is wrapped around a paper roll (4).

## Patentansprüche

1. Dehnbares Verpackungsmaterial, bestehend aus einer Krepppapierschicht (1) und einer Spannfolie aus Kunststoff (3), die mit den Rippen des Kreppapiers verbunden und so auf der Kreppschicht befestigt ist, dadurch gekennzeichnet, daß die Dehnbarkeit der Spannfolie (3) so groß wie die Dehnbarkeit des Kreppapiers (1) ist.

2. Verpackungsmaterial nach Anspruch 1, dadurch gekennzeichnet, daß die Spannfolie (3) die durch die Dehnung erzeugte Spannung in gewissem Maße beibehält.

3. Verpackungsmaterial nach Anspruch 1 oder 2, dadurch gekennzeichnet, daß die Spannfolie (3) an dem Kreppapier (1) mit Hilfe eines Klebers (2) befestigt ist.

4. Verpackungsmaterial nach Anspruch 1 oder 2, dadurch gekennzeichnet, daß die Spannfolie (3) an dem Kreppapier (1) durch Verschweißen befestigt ist.

5. Verpackungsmaterial nach einem der Ansprüche 1 bis 4, dadurch gekennzeichnet, daß das Kreppapier (1) aus Kraft-Krepppapier besteht.

6. Verpackungsmaterial nach einem der Ansprüche 1 bis 5, dadurch gekennzeichnet, daß die Spannfolie (3) nur auf einer Seite des Kreppapiers (1) befestigt ist.

7. Verfahren zur Herstellung des dehnbaren Verpackungsmaterials gemäß einem der Ansprüche 1 bis 6, dadurch gekennzeichnet, daß auf dem Kreppappier (1), an dessen Rippen, eine Spannfolie (3) befestigt wird.

8. Verfahren zum Verpacken eines unregelmäßig geformten Gegenstandes, bei dem ein dehnbares Verpackungsmaterial um den Gegenstand gewickelt wird, dadurch gekennzeichnet, daß das dehnbare Verpackungsmaterial gemäß einem der Ansprüche 1 bis 6 um den Gegenstand gewickelt wird.

9. Verfahren nach Anspruch 8, dadurch gekennzeichnet, daß das Verpackungsmaterial so gewickelt wird, daß die Kreppapierschicht (1) nach innen zeigt.

10. Verfahren nach Anspruch 8 oder 9, dadurch gekennzeichnet, daß das Verpackungsmaterial um eine Papierrolle (4) gewickelt wird.

## Revendications

1. Matériau d'emballage extensible comprenant une couche de papier ondulé (1) ainsi qu'un film de mise sous tension en plastique (3) attaché sur la couche ondulée aux crêtes du papier ondulé, caractérisé en ce que l'extensibilité de ce film de mise sous tension (3) est aussi grande que l'extensibilité de ce papier ondulé (1).

2. Matériau d'emballage selon la revendication 1, caractérisé en ce que le film de mise sous tension (3) maintient la tension produite par l'extension dans une certaine mesure.

3. Matériau d'emballage selon la revendication 1 ou 2, caractérisé en ce que le film de mise sous tension (3) est attaché au papier ondulé (1) au moyen d'un adhésif (2).

4. Matériau d'emballage selon la revendication 1 ou 2, caractérisé en ce que le film de mise sous tension (3) est attaché au papier ondulé (1) par assemblage à chaud.

5. Matériau d'emballage selon l'une des revendications 1 à 4, caractérisé en ce que le papier ondulé (1) consiste en un papier ondulé kraft.

6. Matériau d'emballage selon l'une des revendications 1 à 5, caractérisé en ce que le film de mise sous tension (3) n'est attaché qu'à une seule face du papier ondulé (1).

7. Procédé de fabrication du matériau d'emballage extensible selon l'une des revendications 1 à 6, caractérisé en ce qu'un film de mise sous tension (3) est attaché aux crêtes d'un papier ondulé (1).

8. Procédé d'emballage d'un objet de forme irrégulière, dans lequel un emballage extensible est enveloppé autour d'un objet, caractérisé en ce que l'emballage extensible selon l'une des revendications 1 à 6 est enveloppé autour de cet objet.

9. Procédé selon la revendication 8, caractérisé en ce que l'emballage est enveloppé de manière à ce que la couche de papier ondulé (1) montre vers l'intérieur.

10. Procédé selon la revendication 8 ou 9, caractérisé en ce que l'emballage est enveloppé autour d'un rouleau de papier (4).

Fig.1.

Fig.2.

Fig.3.